# EUROPÄISCHE PATENTSCHRIFT

(11) **EP 0 379 669 B1**
(45) Veröffentlichungstag und Bekanntmachung des Hinweises auf die Patenterteilung: **13.07.1994**
(21) Anmeldenummer: 89121638.4
(22) Anmeldetag: 23.11.1989
(51) Int. Cl.: B60T 8/88

(54) **Verfahren und Sicherheitsschaltung**
Process and safety circuit
Procédure et circuit de sécurité

(30) Priorität: 21.01.1989 DE 3901776
(43) Veröffentlichungstag der Anmeldung: 01.08.1990
(73) Patentinhaber: WABCO Vermögensverwaltungs-GmbH, D-30432 Hannover (DE)
(72) Erfinder: Pannbacker, Helmut, D-3005 Hemmingen 5 (DE)
(74) Vertreter: Schrödter, Manfred, Dipl.-Ing.

(56) Entgegenhaltungen:
- DE-A- 2 546 481
- FR-A- 2 463 705
- US-A- 3 803 425

## Beschreibung

Die Erfindung betrifft ein Verfahren und eine Sicherheitsschaltung zur Überwachung einer blockiergeschützten Fahrzeugbremsanlage gemäß dem Oberbegriff des Patentanspruchs 1 und wie bereits aus DE-A-2 546 481 bekannt ist.

Bei einer blockiergeschützten Fahrzeugbremsanlage werden die Ausgangsgrößen von Meßwertgebern an den zu regelnden Fahrzeugrädern einer Regelelektronik zugeführt. Dabei liefern die Meßwertgeber in der Regel Spannungssignale, deren Frequenz der Fahrzeugradgeschwindigkeit proportional ist. Die Meßwertgeber bilden dabei meist ein magnetisches Feld aus, das durch ein in einem geringen Abstand vorbeilaufendes gezahntes Polrad beeinflußt wird und in der Spule des Meßwertgebers eine Spannung induziert.

Die Meßwertgeber sind an den Fahrzeugrädern angeordnet und damit erheblichen Belastungen durch Fahrzeugerschütterungen und Verschmutzungen ausgesetzt, die die Signalerzeugung erheblich beeinflussen können.

Dadurch ist es möglich, daß Spannungssignale erzeugt werden, die nicht mehr der tatsächlichen Fahrzeugradgeschwindigkeit entsprechen. Da eine derartige fehlerhafte Erfassung der Fahrzeugradgeschwindigkeit während einer Bremsregelung zu einer gefährlichen Situation führen kann, sind meist Sicherheits- und Überwachungsschaltungen vorgesehen, die beim Auftreten von derartigen Fehlern in der blockiergeschützten Bremsanlage diese Fehler erkennen und signalisieren und gegebenenfalls die defekten Teilbereiche der blockiergeschützten Bremsanlage abschalten, so daß die Bremsanlage dann nur noch wie eine herkömmliche Bremsanlage arbeitet.

Aus der Druckschrift "WABCO-Anti-Blockier-System, Erhöhte Sicherheit durch Diagonal-Aufteilung", Ausgabe August '83, Herausgeber: Firma WABCO Westinghouse Fahrzeugbremsen GmbH, Hannover, ist eine Sicherheitsschaltung bekannt, die bei Fahrtantritt und während der Fahrt die Meßwertgeber und die dazugehörige Verkabelung kontrolliert und die auftretenden Fehler dem Fahrer signalisiert und gleichzeitig den fehlerhaften Teil der Anlage diagonal abschaltet. Dabei wird nur der Teil der Regelelektronik für zwei diagonal gegenüberliegende Fahrzeugräder verschiedener Fahrzeugachsen abgeschaltet.

Bei einem Antiblockiersystem mit einer derartigen Sicherheitsschaltung ist es denkbar, daß es beim Anlassen eines großen Nutzkraftfahrzeuges oder beim Gangeinlegen, beim Beladen oder anderen Vibrationen zu kurzzeitigen Radbewegungen einzelner Fahrzeugräder kommt, die die Regelelektronik als Geschwindigkeitssprung wertet. Da solche Geschwindigkeitssprünge als plötzliche unverhältnismäßig große Geschwindigkeitsänderungen gedeutet werden, die beim normalen Fahrbetrieb nicht vorkommen können, wertet die Sicherheitsschaltung dies als Fehler der blockiergeschützten Bremsanlage und schaltet diese ab. Dadurch bleibt lediglich noch die herkömmliche Bremsanlage in Betrieb, die gegenüber der blockiergeschützten Bremsanlage aber weniger Fahrsicherheit bietet. Da aber derartige vibrationsbedingte Störungen keinen echten Fehler der Bremsanlage darstellen, ist es nachteilig, wenn die blockiergeschützte Bremsanlage in solchen Fällen abgeschaltet wird.

Der Erfindung liegt deshalb die Aufgabe zugrunde, ein Verfahren und eine Sicherheitsschaltung der eingangs genannten Art so weiterzuentwickeln und zu verbessern, daß eine unrichtige Fehlererkennung weitgehend verhindert wird.

Diese Aufgabe wird durch die in den Patentansprüchen 1 und 2 angegebene Erfindung gelöst. Weiterbildungen und vorteilhafte Ausführungsbeispiele der Erfindung sind in den Unteransprüchen angegeben.

Die Erfindung hat den Vorteil, daß mit vergleichsweise geringen Mitteln die Sicherheit eines Fahrzeugs mit blockiergeschützter Bremsanlage verbessert wird. So kann die erfindungsgemäße Sicherheitsschaltung durch eine Elektronikschaltung als integrierter Teil der Regelschaltung der blockiergeschützten Bremsanlage realisiert werden. Außer der Elektronikschaltung ist für den Einsatz der erfindungsgemäßen Sicherheitsschaltung keinerlei konstruktiver Mehraufwand erforderlich. Falls die Elektronik der blockiergeschützten Bremsanlage einen Mikroprozessor enthält, so ist die erfindungsgemäße Sicherheitsschaltung auch rein softwaremäßig realisierbar, ohne daß es einer hardwaremäßigen Ergänzung bedarf.

Die erfindungsgemäße Sicherheitsschaltung hat auch den Vorteil, daß sie nur solche Geschwindigkeitssprünge als Fehler meldet, die nicht tatsächlich einen Geschwindigkeitssprung des Fahrzeugs beinhalten. So berücksichtigt die Sicherheitsschaltung auch den Umstand, daß ein Geschwindigkeitssprung bei einem stehenden Fahrzeug nicht vorkommen kann. Die Sicherheitsschaltung überprüft deshalb vor jeder Fehlermeldung, ob das Fahrzeug eine bestimmte Geschwindigkeit überschritten hat oder nicht. Dabei ist es auch gleichgültig, ob der Geschwindigkeitssprung aus dem Stand heraus erfolgt (Geschwindigkeitshochsprung) oder ob das Fahrzeug von einer bestimmten Geschwindigkeit zum Stillstand (Geschwindigkeitsruntersprung) gelangt ist.

Dies erreicht die erfindungsgemäße Sicherheitsschaltung dadurch, dab sie eine Art Plausibilitätsprüfung durchführt, die bei bestimmten Betriebsbedingungen erkennen kann, ob tatsächlich ein Defekt an einem der Meßwertgeber oder ob nur eine kurzzeitige unwesentliche Störung vorliegt. So geht die Erfindung von der Erkenntnis aus, daß z. B. ein Ausfall eines Meßwertgebers nur dann vorliegen kann, wenn einer der anderen Meßwertgeber ebenfalls ein Geschwindigkeitssignal liefert, andernfalls kann es sich auch darum handeln, daß das Fahrzeug noch steht. Bei stehendem Fahrzeug ist aber eine Abschaltung der blockiergeschützten Bremsanlage nicht angezeigt. Deshalb ist die Sicherheitsschaltung in der Lage, echte Fehler an einem der Meßwertgeber oder anderen geprüften Bauelementen der blockiergeschützten Bremsanlage zu erkennen und nur dann den sicherheitstechnisch sehr wichtigen Blockierschutz abzuschalten.

Bei einer besonderen Ausführungsart der Erfindung wird die Drehzahl des überwachten Fahrzeugrades der einen Fahrzeugachse mit der Drehzahl des diagonal gegenüberliegenden Fahrzeugrades der anderen Achse verglichen und bei Fehlererkennung nur dieser diagonale Zweig abgeschaltet. Dies hat den Vorteil, daß für den anderen diagonalen Zweig die blockiergeschützte Bremsanlage weiterhin funktionsfähig bleibt und hierdurch eine eventuelle Instabilität des Fahrzeugs durch blockierende Räder verhindert wird.

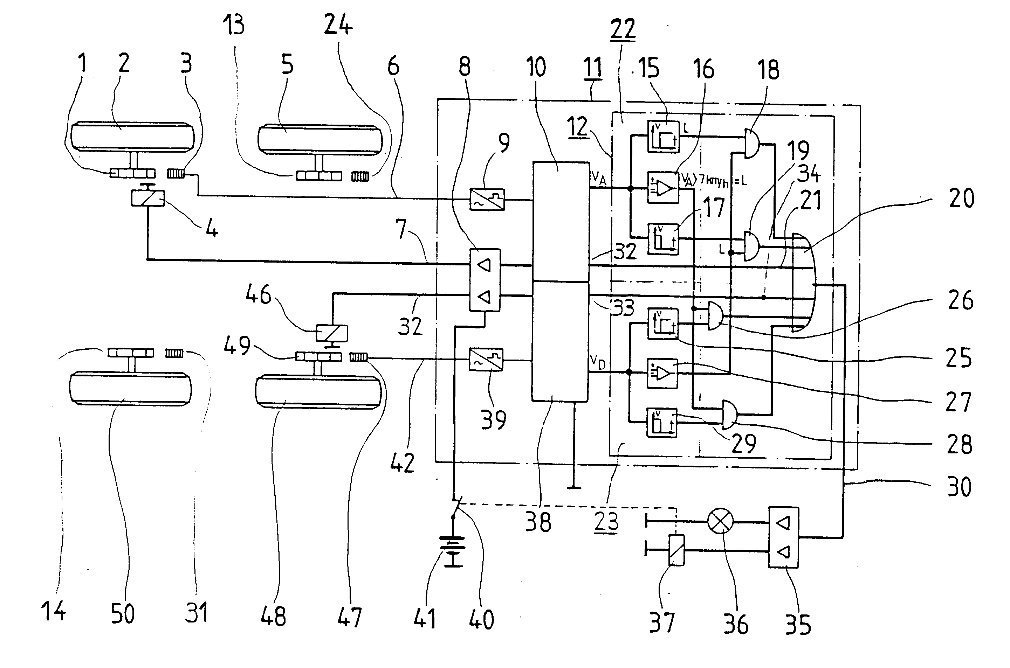

Die Erfindung wird im folgenden anhand eines Ausführungsbeispiels, das in der Zeichnung dargestellt ist, näher erläutert.

Die Zeichnung zeigt ein Blockschaltbild einer blockiergeschützten Bremsanlage mit Sicherheitsschaltung für zwei Regelkanäle. Dabei sind vier überwachte Fahrzeugräder eines Fahrzeugs dargestellt, von denen jeweils zwei diagonal gegenüberliegende Fahrzeugräder einer Regelelektronik mit einer gemeinsamen Sicherheitsschaltung zugeordnet sind. Die den anderen beiden diagonal gegenüberliegenden Fahrzeugrädern zugeordnete Regelelektronik mit deren zugehöriger Sicherheitsschaltung ist nicht gesondert dargestellt, weil deren Aufbau mit dem der dargestellten Regelelektronik identisch ist.

Die Fahrzeugräder (2, 5, 45, 50) sind jeweils mit einem Polrad (1, 13, 14, 49) fest verbunden. Die Polräder besitzen die gleiche Umdrehungszahl wie die Fahrzeugräder, so daß deren Umfangsgeschwindigkeit proportional zur Radgeschwindigkeit verläuft. Die Polräder können aber auch an den Antriebs- oder Lagerwellen angeordnet sein. Bei den Polrädern handelt es sich um eine herkömmliche Ausführungsform, wobei am Umfang zahnförmige Segmente aus ferromagnetischem Material angeordnet sind. Gegenüber den Polrädern ist jeweils ein Meßwertgeber (3, 47, 24, 31) befestigt, der in der Regel aus einem Stabmagneten und einer Spule besteht, wobei bei umlaufendem Polrad eine elektrische Spannung in der Spule induziert wird. Dabei entspricht die Frequenz der elektrischen Spannung der Geschwindigkeit des jeweils umlaufenden Rades.

Vom Meßwertgeber (3) führt eine elektrische Meßwertgeberleitung (6) zur Regelelektronik (11). In der Regelelektronik (11) ist die Meßwertgeberleitung (6) zu einer Signalaufbereitungsschaltung (9) geführt, die die vom Meßwertgeber (3) erzeugten Spannungssignale von den Störsignalen trennt und eine Signalaufbereitung vornimmt, indem sie die erzeugten Spannungssignale zu einer rechteckförmigen Spannung von konstanter Amplitude umformt, deren Frequenz der Radgeschwindigkeit entspricht.

Die so aufbereiteten analogen Spannungssignale werden der Regelschaltung (10) (Mikrocomputer) zugeführt, die daraus ca. alle 4 ms (entsprechend der Programm-Umlaufzeit) ein digitales Radgeschwindigkeitssignal ermittelt. Die Regelelektronik (11) verfügt über so viele gleichartige Regelschaltungen (10, 38), wie durch Meßwertgeber (3, 47) erfaßte Fahrzeugräder vorhanden sind. Dabei bilden jeweils zwei Regelschaltungen (10, 38), die jeweils zwei diagonal gegenüberliegenden Rädern zugeordnet sind, eine Einheit, die durch eine gemeinsame Sicherheitsschaltung (12) überwacht wird.

Da sich die Erfindung auf eine Sicherheitsschaltung bezieht, die in erster Linie die Funktion hat, die Meßwertgeber (3, 47) und deren Meßwertgeberleitungen (6, 42) zu überwachen, zeigt die Zeichnung nur den Teil der Sicherheitsschaltung, der sich auf diesen Überwachungsteil bezieht. Darüber hinaus enthalten die Regelschaltungen (10, 38) auch noch Schaltungsteile, die die Magnetregelventile (4, 46) und andere Schaltungsteile der blockiergeschützten Bremsanlage überprüfen. Dieser Überprüfung sind Fehler-Leitungen (21, 34) zugeordnet, die mit dem Eingang eines ODER-Gatters (20) verbunden sind.

Die Sicherheitsschaltung (12) besteht im wesentlichen aus zwei gleichartigen Schaltungsteilen (22, 23), wobei jeder Teil einem Regelschaltkreis (10, 38) zugeordnet ist. Die beiden Schaltungsteile (22, 23) sind durch eine Logikschaltung (18, 19, 20, 26, 28) miteinander verknüpft und bilden einen gemeinsamen Signalausgang (30), der eine Signaleinrichtung (36) und eine Abschalteinrichtung (37, 40) über eine Verstärkerschaltung (35) ansteuert.

Der Teil (22) der Sicherheitsschaltung (12), der dem Regelkanal (10) zugeordnet ist, besteht aus einer ersten Sprungerkennungsschaltung (15), einer ersten Vergleicherschaltung (16) und einer zweiten Sprungerkennungsschaltung (17), deren Eingänge mit einem Ausgang V_{A} der Regelschaltung (10) verbunden sind und denen auf diesem Wege das Geschwindigkeitssignal (V_{A}) für das geregelte Fahrzeugrad (2) zugeführt wird.

Die erste Sprungerkennungsschaltung (15) dient zur Erkennung eines Geschwindigkeitssprungs, der einer positiven Radbeschleunigung entspricht. Die Sprungerkennungsschaltung (15) enthält eine Eingangsschaltung, die durch ein digitales Geschwindigkeitssignal aktivierbar ist, dessen Wert einer Geschwindigkeit von null Kilometern pro Stunde entspricht. Folgt einem derartigen Aktivierungssignal ein Geschwindigkeitssignal, so wird dies mit einem Signal verglichen, das eine Radgeschwindigkeit von 7 km/h entspricht. Übersteigt das Geschwindigkeitssignal den Betragswert der Radgeschwindigkeit von 7 km/h, so wird als Ausgangssignal ein Fehlersignal gebildet, das dem ersten UND-Gatter (18) zugeführt wird.

Das digitale Radgeschwindigkeitssignal wird gleichzeitig auch der ersten Vergleicherschaltung (16) zugeführt, die dieses Signal mit einem Schwellenwert vergleicht, der einer Geschwindigkeit von 7 km/h entspricht. Dabei erzeugt die erste Vergleicherschaltung (16) ein Fehlersignal als Ausgangssignal, wenn der Wert des Geschwindigkeitssignals einen Wert überschreitet, der einer Mindestgeschwindigkeit von 7 km/h entspricht. Dieses Ausgangssignal liegt dann an einem der beiden Eingänge eines dritten UND-Gatters (26) und einem der beiden Eingänge eines vierten UND-Gatters (28).

Das Geschwindigkeitssignal, das dem Fahrzeugrad (2) zugeordnet ist, liegt gleichfalls auch an der zweiten Sprungerkennungsschaltung (17) an. Hierbei handelt es sich um eine Schaltung, die einen Geschwindigkeitsruntersprung von größer als 11,2 km/h auf einen Wert von ca. 0 km/h oder auf eine festgelegte Fahrzeug-Minimalgeschwindigkeit erkennt.

Die Sprungerkennungsschaltungen (15, 17) enthalten eine Speicherschaltung, die im Rhythmus der Geschwindigkeitserfassung angeregt wird. Die Regelelektronik (11) erfaßt in einem Abstand von ca. 4 ms die jeweilige Radgeschwindigkeit und legt dieses Geschwindigkeitssignal an den Eingang der Schaltungen (15, 16, 17). Die zweite Sprungerkennungsschaltung (17) speichert den angelieferten Wert jeweils im Rhythmus der Geschwindigkeitserfassung von ca. 4 ms ein und gleichfalls den vorigen Wert auch wieder aus. Dabei wird nur dann ein Ausgangssignal erzeugt, wenn der Wert der vorangegangenen (gefilterten) Geschwindigkeitserfassung einem Wert von mehr als 11,2 km/h entsprach und der derzeitige (ungefilterte) Wert eine Geschwindigkeit von ca. 0 km/h aufweist. Das Ausgangssignal der zweiten Sprungerkennungsschaltung (17) stellt gleichfalls ein Fehlerzignal dar und wird an das zweite UND-Gatter (19) angelegt.

Desgleichen enthält die Sicherheitsschaltung (12) in ihrem anderen Teil (23) eine dritte Sprungerkennungsschaltung (25), eine zweite Vergleicherschaltung (27) und eine vierte Sprungerkennungsschaltung (29), die dem Regelkanal (38) zugeordnet sind und den Meßwertgeber (47) des Fahrzeugrades (48) überwachen. Dabei dient die erste und die dritte Sprungerkennungsschaltung (15, 25) zur Ermittlung eines Geschwindigkeitshochsprungs von 0 km/h bis auf mindestens 7 km/h zwischen zwei aufeinanderfolgenden Meßzyklen von jeweils ca. 4 ms Dauer. Die zweite und die vierte Sprungerkennungsschaltung (17, 29) dient hingegen zur Ermittlung eines Geschschwindigkeitsruntersprungs von größer als 11,2 km/h auf 0 km/h. Das Fahrzeugrad (48) enthält ebenfalls ein Polrad (49), dessen Umlaufgeschwindigkeit von dem Meßwertgeber (47) erfaßt und über eine Signalaufbereitungsschaltung (39) der Regelschaltung (38) zugeführt wird. Diese Regelschaltung (38) ermittelt gleichfalls aus den Meßwertgebersignalen alle ca. 4 ms ein digitales Geschwindigkeitssignal, das der Radgeschwindigkeit des erfaßten Fahrzeugrades (48) entspricht. Das Geschwindigkeitssignal (V_{D}) wird der dritten Sprungerkennungsschaltung (25), der zweiten Vergleicherschaltung (27) und der vierten Sprungerkennungsschaltung (29) zugeführt. Dabei ist der Ausgang der dritten Sprungerkennungsschaltung (25) an den Eingang des dritten UND-Gatters (26), der Ausgang der zweiten Vergleicherschaltung (27) an das zweite UND-Gatter (19) und den zweiten Eingang das ersten UND-Gatters (18) und der Ausgang der vierten Sprungerkennungsschaltung (29) an den zweiten Eingang des vierten UND-Gatters (28) gelegt. Die Ausgänge der vier UND-Gatter (18, 19, 26, 28) liegen auf den Eingängen eines ODER-Gatters (20).

Weiter ist der Eingang des ODER-Gatters (20) noch mit zwei Signalausgängen (32, 33) der beiden Regelschaltungen (10, 38) verbunden, die bei Fehlern anderer Schaltungsteile aktiviert sind.

Der Ausgang (30) des ODER-Gatters (20) ist mit einer Verstärkerschaltung (35), die eine Signallampe (36) ansteuert, verbunden. Gleichzeitig steuert die Verstärkerschaltung (35) auch ein Abschaltrelais (37) an, das mit einem Ausschaltkontakt (40) die Spannungsversorgung (41) eines Endverstärkers (8) für die beiden Magnetregelventile (46) und (4) abschaltet. Der Endverstärker (8) ist mit den Magnetregelventilen (4, 46) über Leitungen (7, 32) verbunden.

Die anderen beiden diagonal gegenüberliegenden Fahrzeugräder (5, 50) verfügen über entsprechende Polräder (13, 14) mit Meßwertgebern (24, 31), die mit einer (nicht dargestellten) Regelelektronik mit gleichartiger Sicherheitsschaltung ausgerüstet sind. Die vorstehend beschriebene Sicherheitsschaltung (22) arbeitet wie folgt:

Vorausgesetzt sei zunächst, die blockiergeschützte Bremsanlage ist voll funktionsfähig und das Fahrzeug befindet sich im Stand. In diesem Falle liefern die Meßwertgeber (3, 24, 31, 47) keinerlei Spannungsimpulse, so daß auch die Signalaufbereitungsschaltungen (9, 39) noch nicht ansprechen können und die Regelschaltungen (10, 38) jeweils eine Geschwindigkeit von 0 km/h errechnen werden. Da die Regelschaltungen (10, 38) einmal pro Umlaufzeit (ca. alle 4 ms) die einzelnen Radgeschwindigkeiten abfragen, werden diese für jeden Meßzyklus eine Geschwindigkeit von 0 km/h ermitteln. Ein solches digitales Geschwindigkeitssignal wird nun gleichzeitig auch an den Sprungerkennungsschaltungen (15, 17, 25, 29) und den Vergleicherschaltungen (16, 27) anliegen. Die Sprungerkennungsschaltungen (15, 17, 25, 29) bilden aber immer erst dann ein Fehlersignal als Ausgangssignal, wenn die oben erläuterte Geschwindigkeitsänderung vorliegt. Da dies während des Stillstands nicht der Fall ist, liegt an mindestens einem der beiden Eingänge aller UND-Gatter (18, 19, 26, 28) kein Signal an. Die UND-Gatter können deshalb auch kein Ausgangssignal bilden, das in der Lage wäre, über das ODER-Gatter (20) die Signaleinrichtung (36) und/oder die Abschalteinrichtung (37) anzusteuern.

Setzt sich das Fahrzeug nun langsam in Bewegung und erreicht z.B. eine Geschwindigkeit von 30 km/h, so liefern die Meßwertgeber (3, 47) Spannungssignale an die Signalaufbereitungsschaltung (9, 39), deren Frequenz der Rad- bzw. der Fahrzeuggeschwindigkeit proportional ist. Hieraus bilden die Signalaufbereitungsschaltungen (9, 39) Rechteckspannungssignale, deren Frequenz der Frequenz der angelieferten Signale entspricht. Aus den Rechteckspannungssignalen errechnen die Regelschaltungen (10, 38) digitale Geschwindigkeitssignale, die der Radgeschwindigkeit von 30 km/h entsprechen. Die Geschwindigkeitssignale werden jeweils den Eingängen der Sprungerkennungsschaltungen (15, 17, 26, 29) sowie den Vergleicherschaltungen (16, 27) zugeführt. Während dieses Beschleunigungsvorgangs haben die Regelschaltungen (10, 38) ca. alle 4 ms ein aktuelles Geschwindigkeitssignal errechnet. Da auch bei maximal möglicher Fahrzeugbeschleunigung zwischen den einzelnen Meßzeitpunkten die Geschwindigkeitsänderung nie einen Wert von 7 km/h übersteigen kann, können auch die erste Sprungerkennungsschaltung (15) und die dritte Sprungerkennungsschaltung (25) kein Fehlersignal als Ausgangssignal bilden. Damit liegt auch am ersten UND-Gatter (18) und am dritten UND-Gatter (26) an mindestens einem der beiden Eingänge kein Eingangssignal an, so daß es bei diesen UND-Gattern auch nicht zu einem Ausgangssignal kommen kann.

Auch die zweite Sprungerkennungsschaltung (17) und die vierte Sprungerkennungsschaltung (29) liefern kein Ausgangssignal, da diese nur dann ein Ausgangssignal bilden können, wenn das Geschwindigkeitssignal zwischen zwei Meßzeitpunkten auf einen Wert von ca. 0 km/h oder weniger abfällt. Dabei stellen die Sprungerkennungsschaltungen (16, 17, 25, 29) einen Prüf- und Überwachungsschaltkreis dar, der zur Ausbildung der Fehlersignale dient. Damit liegt auch an mindestens einem Eingang des zweiten UND-Gatters (19) und an mindestens einem Eingang des vierten UND-Gatters (28) kein Eingangssignal an, so daß auch diese UND-Gatter kein Ausgangssignal bilden können. Eine Ansteuerung der Signaleinrichtung (36) und der Abschalteinrichtung (37) ist in diesem Fall deshalb auch bei einer maximalen Beschleunigung des Fahrzeugs nicht möglich.

Wird nun angenommen, der Meßwertgeber (3) des Fahrzeugrades (2) liefere aufgrund von Verschmutzungen oder größeren Luftspaltänderungen nur sporadische Spannungsimpulse an die Regelschaltung (10), so geht die Regelschaltung (10) solange von einem Stillstand des Rades (2) aus, solange der Meßwertgeber (3) keine Spannungsimpulse von mindestens 50 mV Höhe liefert. Solange dies der Fall ist, wird die erste Sprungerkennungsschaltung (15) aktiviert.

Liefert der Meßwertgeber (3) nun plötzlich Spannungsimpulse, die einer Geschwindigkeit von mehr als 7 km/h entsprechen, so errechnet die Regelschaltung (10) daraus die entsprechende digitale Radgeschwindigkeit. Ein derartiger Geschwindigkeitssprung ist aber bei einer realen Fahrzeugbeschleunigung nicht möglich, so daß die erste Sprungerkennungsschaltung (15) als Ausgangssignal ein Fehlersignal liefert, daß dem ersten UND-Gatter (18) der nachfolgenden Logikschaltung zugeführt wird.

Gleichzeitig wird aber auch der Meßwertgeber (47) des dem Fahrzeugrad (2) diagonal gegenüberliegenden Fahrzeugrades (48) durch die Sicherheitsschaltung (23) überprüft. In der zugehörigen Regelschaltung (38) der Regelelektronik (11) wird bei sich drehendem Fahrzeugrad ein digitales Geschwindigkeitssignal gebildet, das der Fahrzeuggeschwindigkeit entspricht. Da diese einer Geschwindigkeit von mehr als 7 km/h entspricht, bildet die zweite Vergleicherschaltung (27) ein Fehlersignal als Ausgangssignal, das mit einem Eingang des ersten UND-Gatters (18) verbunden ist. Die Ausgangssignale entsprechen dabei den L-Signalen bei Logikschaltungen. Da nun sowohl die erste Sprungerkennungsschaltung (15) als auch die zweite Vergleicherschaltung (27) ein Ausgangssignal an das erste UND-Gatter (18) anlegen, bildet auch dieses ein Ausgangssignal, das am ODER-Gatter (20) anliegt. Das ODER-Gatter (20) bildet nun daraus auch ein Ausgangssignal, das über die Verstärkerschaltung (35) die Signaleinrichtung (36) ansteuert und gleichzeitig die Abschalteinrichtung (37) betätigt, die über einen Arbeitskontakt (40) dem Endverstärker (8) für die Magnetregelventile (4, 46) abschaltet, so daß der Blockierschutz für die Räder (2) und (48) nicht mehr in Betrieb ist.

Bei großen Nutzkraftfahrzeugen kann es auch vorkommen, daß es beim Starten des Motors, beim Einlegen eines Ganges oder bei anderen Erschütterungen an einzelnen Fahrzeugrädern zu plötzlichen Radbewegungen kommt. Sollte es z.B. zu einer solchen plötzlichen Radbewegung des Fahrzeugrades (2) gekommen sein, so könnte daraus die Regelschaltung (10) ein plötzliches Ansteigen der Radgeschwindigkeit auf einen Wert von mehr als 7 km/h errechnen, obgleich das Fahrzeug noch nicht fährt. In einem solchen Fall soil durch die Sicherheitsschaltung (12) der Blockierschutz nicht gleich abgeschaltet werden, da dann kein Fehler der Anlage vorliegt, der die Funktion der blockiergeschützten Bremsanlage beeinflußt.

Bei einer derartigen Geschwindigkeitsänderung von 0 auf mehr als 7 km/h wird in der ersten Sprungerkennungsschaltung (15) ein Fehlersignal als Ausgangssignal gebildet. Dieses Ausgangssignal liegt dann am ersten Eingang des ersten UND-Gatters (18). Da bei nicht fahrendem Fahrzeug der Meßwertgeber (47) am Fahrzeugrad (48) keine Spannungssignale liefert, wird auch an der zweiten Vergleicherschaltung (27) kein Geschwindigkeitssignal anliegen, so daß auch die zweite Vergleicherschaltung (27) kein Fehlersignal als Ausgangssignal erzeugt, das am ersten UND-Gatter (18) anliegt. Da am ersten UND-Gatter (18) in diesem Fall nur das Ausgangssignal der ersten Sprungerkennungsschaltung (15) anliegt, bildet auch das erste UND-Gatter (18) kein Ausgangssignal, so daß weder die Signaleinrichtung (36) noch die Abschalteinrichtung (37) angesteuert wird und somit keine Abschaltung der blockiergeschützten Bremsanlage erfolgt.

Ähnlich wie vorstehend bereits beschrieben arbeitet die Sicherheitsschaltung auch, wenn es bei einem Fahrzeugrad zu einem scheinbaren Geschwindigkeitssprung kommt, bei dem die Radgeschwindigkeit von einem Geschwindigkeitswert von z.B. 20 km/h plötzlich auf einen Wert von ca. 0 km/h abfällt. Diesen Fall stellt die Sicherheitsschaltung (12) immer dann fest, wenn der Meßwertgeber eines Fahrzeugrades plötzlich ausgefallen ist oder aus anderen Gründen, wie z. B. bei einer Beschädigung der Verbindungsleitung, kein Geschwindigkeitssignal mehr geliefert wird. Da ein Fahrzeugrad eine derartige Bremsverzögerung in Realität nicht erreichen kann, soil die Sicherheitsschaltung (12) in einem solchen Fall die Signaleinrichtung (36) einschalten und den Blockierschutz ausschalten. Andernfalls könnte es zu Fehlregelungen der blockiergeschützten Bremsanlage kommen, die aus Sicherheitsgründen nicht vertretbar wären.

Vorausgesetzt, das Fahrzeug würde mit einer Geschwindigkeit von z.B. 20 km/h fahren und die Regelschaltung (10) des Fahrzeugrades (2) würde wegen eines Defektes plötzlich keine Geschwindigkeitssignale mehr feststellen, so läge dann am Ausgang der Regelschaltung (10) ein Geschwindigkeitssignal an, das einer Geschwindigkeit von ca. 0 km/h entspräche. Fällt bei zwei aufeinanderfolgenden Meßzyklen die gefilterte Geschwindigkeit eines Fahrzeugrades von einem Wert von mindestens 11,2 km/h auf ca. 0 km/h ab, so stellt die zweite Sprungerkennungsschaltung (17) einen Geschwindigkeitsruntersprung fest und liefert daraufhin ein Fehlersignal als Ausgangssignal an den Eingang des zweiten UND-Gatters (19).

Gleichzeitig liefert das dem Fahrzeugrad (2) diagonal gegenüberliegende Fahrzeugrad (48) Geschwindigkeitsimpulse an die Regelschaltung (38), die einer Fahrzeug- und damit auch einer Radgeschwindigkeit von 20 km/h entsprechen. Da die Regelschaltung (38) baugleich mit der Regelschaltung (10) ist, liegt am Ausgang der Regelschaltung (38) ein Geschwindigkeitssignal V_{D} an, das einer Geschwindigkeit von 20 km/h entspricht.

Dieses Geschwindigkeitssignal liegt gleichzeitig auch am Eingang der zweiten Vergleicherschaltung (27), die dann ein Fehlersignal als Ausgangssignal bildet, das dann auch am Eingang des zweiten UND-Gatters (19) anliegt. Da nun an beiden Eingängen des zweiten UND-Gatters (19) ein Eingangssignal anliegt, bildet das zweite UND-Gatter (19) ein Ausgangssignal, das über das ODER-Gatter (20) die Signaleinrichtung (36) und die Abschalteinrichtung (37) ansteuert und damit den Blockierschutz der Räder (2) und (48) abschaltet.

Bei einer blockiergeschützten Fahrzeugbremsanlage kann es aber auch vorkommen, daß ein Geschwindigkeitsruntersprung durch Erschütterungen eines stehenden Fahrzeugs festgestellt wird. Auch in einem solchen Fall soll verhindert werden, daß dies zu einem Abschalten des Blockierschutzes führt.

Angenommen, die zweite Sprungerkennungsschaltung (17) stellt bei stehendem Fahrzeug einen Geschwindigkeitsruntersprung fest, so bildet dieses am Ausgang ein Fehlersignal, das gleichzeitig am Eingang des zweiten UND-Gatters (19) anliegt. Da bei stehendem Fahrzeug auch die zweite Vergleicherschaltung (27) kein Fahrsignal als Ausgangssignal liefern kann, liegt auch am zweiten Eingang des zweiten UND-Gatters (19) kein Eingangssignal an, so daß auch dieses UND-Gatter (19) kein Ausgangssignal liefert, das über das ODER-Gatter (20) eine Ansteuerung der Signaleinrichtung (36) und der Abschalteinrichtung (37) bewirken kann.

Zusammenfassend kommt es dann zu der Fehlermeldung, wenn an einem Rad der Geschwindigkeitshochsprung erkannt wird, und gleichzeitig am diagonal gegenüberliegenden Rad oder einem anderen Rad eine Fahrzeuggeschwindigkeit von größer als 7 km/h festgestellt wird.

Es kann auch zu einer Fehleranzeige aufgrund anderer Fehlererkennungen kommen. So enthält die Regelschaltung (10) und die Regelschaltung (38) noch andere Überwachungsschaltungen, die Fehlersignale an die Signalverbindungsleitungen (21, 34) anlegen können und somit ein Ausgangssignal des ODER-Gatters (20) erzeugen. Hierdurch kann es gleichfalls zu vorstehend bereits beschriebenen Abschaltungen der Regelventile und zu Fehleranzeigen kommen.

Die Sicherheitsschaltung (12) ist hinsichtlich ihrer beiden den einzelnen Regelkanälen zugeordneten Teilen (22, 23) gleichartig ausgebildet, so daß die Funktionsweise bei Geschwindigkeitssprüngen am Fahrzeugrad (48) die gleiche ist als die zuvor am Beispiel des Fahrzeugrades (2) beschriebene. Dabei entsprechen die Funktionsweisen der ersten und zweiten Sprungerkennungsschaltungen (15, 17) denen der dritten und vierten Sprungerkennungsschaltungen (25, 29), sowie die der ersten Vergleicherschaltung (16) der der zweiten Vergleicherschaltung (27). Die Funktionsweisen der ersten und zweiten UND-Gatter (18, 19) entsprechen gleichfalls denen der dritten und vierten UND-Gatter (26, 28).

Im übrigen verfügt die blockiergeschützte Bremsanlage für die Fahrzeugräder (5, 50) der zweiten Diagonale über eine weitere Regelektronik mit Sicherheitsschaltung (nicht dargestellt), die gleichfalls der hier zuvor beschriebenen Ausführung entspricht. Darüber hinaus kann die Funktion der Sicherheitsschaltung (12) auch durch die entsprechende Programmierung eines Mikroprozessors realisiert sein.

## Patentansprüche

1. Verfahren zur Überwachung der ordnungsgemäßen Funktion der Elektronik (10, 38) einer blockiergeschützten Fahrzeugbremsanlage,
dadurch gekennzeichnet, daß
eine Fehlermeldung und/oder eine Teilabschaltung der Elektronik (10, 38) dann erfolgt, wenn für die Geschwindigkeit eines Rades (2, 50) ein an sich als Fehler anzusehender Geschwindigkeitssprung erkannt wird und gleichzeitig die Geschwindigkeit des diagonal gegenüberliegenden Rades (48, 5) oder eines anderen Rades einen höheren Wert als einen vorgegebenen Grenzwert aufweist.

2. Sicherheitsschaltung zur Ausführung des Verfahrens nach Anspruch 1, dadurch gekennzeichnet, daß die Sicherheitsschaltung (12) aus zwei je einem Regelschaltkreis (10, 38) zugeordneten Schaltungsteilen (22, 23) besteht, welche jeweils eine erste Sprungerkennungsschaltung (15, 25) für einen Geschwindigkeitshochsprung, eine zweite Sprungerkennungsschaltung (17, 29) für einen Geschwindigkeitsruntersprung und eine Vergleicherschaltung (16, 27) zur Erkennung einer Radgeschwindigkeitsgrenze enthält, wobei die beiden Schaltungsteile (22, 23) durch eine nachfolgende Logikschaltung (18, 19, 26, 28) miteinander verknüpft sind, so daß eine Fehlermeldung und/oder eine Teilabschaltung der Elektronik (10, 38) dann erfolgt, wenn für die Geschwindigkeit eines Rades (2, 50) ein an sich als Fehler anzusehender Geschwindigkeitssprung erkannt wird und gleichzeitig die Geschwindigkeit des diagonal gegenüberliegenden Rades (48, 5) oder eines anderen Rades einen höheren Wert als einen vorgegebenen Grenzwert aufweist.

3. Sicherheitsschaltung nach Anspruch 2, dadurch gekennzeichnet, daß die Logikschaltung aus vier UND-Gattern (18, 19, 26, 28) besteht, die jeweils über zwei Eingänge verfügen, die mit den Ausgängen der Sprungerkennungsschaltungen (15, 17, 25, 30) und der Vergleicherschaltungen (16, 27) verbunden sind, wobei deren Ausgänge auf die Eingänge eines ODER-Gatters (20) geschaltet sind.

4. Sicherheitsschaltung nach Anspruch 2, dadurch gekennzeichnet, daß die Sprungerkennungsschaltungen (15, 25, 17, 29) dann aktiviert sind, wenn der Geschwindigkeitshochsprung von etwa Null auf ± 7 km/h erfolgt, oder der Geschwindigkeitsruntersprung von größer 11,2 km/h auf etwa Null erfolgt und die Radgeschwindigkeitsgrenze bei 7 km/h liegt.

5. Sicherheitsschaltung nach wenigstens einem der Ansprüche 2 bis 4, dadurch gekennzeichnet, daß die Sicherheitsschaltung (12) durch einen Mikroprozessor oder eine integrierte Schaltung realisiert ist.

6. Sicherheitsschaltung nach wenigstens einem der Ansprüche 2 bis 5, dadurch gekennzeichnet, daß der Ausgang (30) der Sicherheitsschaltung (12) mit einer Speicher- und Verstärkerschaltung (35) verbunden ist, die eine Signaleinrichtung (36) und/oder eine Abschalteinrichtung (37, 40) für die betroffene Diagonale ansteuert.

## Claims

1. Method of monitoring the proper function of the electronics (10, 38) of an anti-lock vehicle brake system,
characterized in that
an error message and/or partial disablement of the electronics (10, 38) is effected whenever for the speed of a wheel (2, 50) a sudden change in speed, that by itself would be regarded as an error, is detected and at the same time the speed of the diagonally opposite wheel (48, 5) or of another wheel has a higher value than a predetermined limit value.

2. A safety circuit for implementing the method according to Claim 1, characterized in that the safety circuit (12) comprises two circuit parts (22, 23) each associated with a respective control circuit (10, 38) and each of which contains a first transient detection circuit (15, 25) for a sudden increase in speed, a second transient detection circuit (17, 29) for a sudden drop in speed, and a comparator circuit (16, 27) for recognising a wheel speed limit, the two circuit parts (22, 23) being linked to one another by a downstream logic circuit (18, 19, 26, 28) so that an error message and/or partial disablement of the electronics (10, 38) is effected whenever for the speed of a wheel (2, 50) a sudden change in speed, that by itself would be regarded as an error, is detected and at the same time the speed of the diagonally opposite wheel (48, 5) or another wheel has a higher value than a predetermined limit value.

3. A safety circuit according to claim 2,
characterized in that the logic circuit comprises four AND-gates (18, 19, 26, 28) each of which has two inputs which are connected to the outputs of the transient detection circuits (15, 17, 25, 30) and the comparator circuits (16, 27), the outputs of which AND-gates are connected to the inputs of an OR-gate (20).

4. A safety circuit according to claim 2, characterized in that the transient detection circuits (15, 25, 27, 29) are actuated whenever the sudden increase in speed is from about zero to ± 7 km/h, or whenever the sudden drop in speed is from more than 11.2 km/h to about zero and the wheel speed limit lies at 7 km/h.

5. A safety circuit according to at least one of Claims 2 to 4, characterized in that the safety circuit (12) is embodied by a microprocessor or an integrated circuit.

6. A safety circuit according to at least one of Claims 2 to 5, characterized in that the output (30) of the safety circuit (12) is connected to a memory and amplifier circuit (35) which energizes a signal device (36) and/or a disabling device (37, 40) for the relevant diagonal.

## Revendications

1. Procédé pour surveiller le fonctionnement convenable de l'électronique (10, 38) d'un système de freinage de véhicule muni d'un système antiblocage, caractérisé en ce qu'une signalisation d'erreur et/ou un arrêt partiel de l'électronique (10, 38) s'effectue lorsque, pour la vitesse d'une roue (2, 50), il est constaté un bond de vitesse qui est en lui-même à considérer comme une erreur et que, en même temps, la vitesse de la roue (48, 5) située diagonalement en face, ou d'une autre roue, présente une valeur plus élevée qu'un seuil préfixé.

2. Circuit de sécurité pour la mise en oeuvre du procédé selon la revendication 1, caractérisé en ce que le circuit de sécurité (12) est composé de deux parties de circuit (22, 23), coordonnées chacune à un circuit de réglage (10, 38), qui comportent chacune un premier circuit détecteur de bond (15, 25) pour détecter un saut de vitesse ascendant, un deuxième circuit détecteur de bond (17, 29) pour détecter un saut de vitesse descendant, ainsi qu'un circuit comparateur (16, 27) pour détecter une limite de vitesse de roue, les deux parties de circuit (22, 23) étant interconnectées par un circuit logique (18, 19, 26, 28) prévu à la suite, l'agencement étant tel qu'une signalisation d'erreur et/ou un arrêt partiel de l'électronique (10, 38) est opéré lorsque, pour la vitesse d'une roue (2, 50), il est détecté un bond de vitesse à considérer en lui-même comme une erreur et que, en même temps, la vitesse de la roue (48, 50) située diagonalement en face, ou d'une autre roue, présente une valeur plus élevée qu'un seuil préfixé.

3. Circuit de sécurité selon la revendication 2, caractérisé en ce que le circuit logique se compose de quatre portes ET (18, 19, 26, 28) qui disposent chacune de deux entrées connectées aux sorties des circuits détecteurs de bonds (15, 17, 25, 30) et des circuits comparateurs (16, 27), les sorties des portes ET étant connectées aux entrées d'une porte OU (20).

4. Circuit de sécurité selon la revendication 2, caractérisé en ce que les circuits détecteurs de bonds (15, 25, 17, 29) sont activés lorsque se produit un saut de vitesse ascendant d'environ zéro à ± 7 km/h, ou lorsque se produit un saut de vitesse descendant de plus de 11,2 km/h à environ zéro et que la limite de vitesse de roue est d'environ 7 km/h.

5. Circuit de sécurité selon au moins une des revendications 2 à 4, caractérisé en ce que le circuit de sécurité (12) est constitué par un microprocesseur ou un circuit intégré.

6. Circuit de sécurité selon au moins une des revendications 2 à 5, caractérisé en ce que la sortie (30) du circuit de sécurité (12) est reliée à un circuit de mémoire et d'amplification (35) qui commande un dispositif de signalisation (36) et/ou un dispositif d'arrêt (37, 40) pour la diagonale concernée.
